# EUROPÄISCHE PATENTSCHRIFT

(11) **EP 0 458 076 B1**
(45) Veröffentlichungstag und Bekanntmachung des Hinweises auf die Patenterteilung: **27.10.1993**
(21) Anmeldenummer: 91106550.6
(22) Anmeldetag: 23.04.1991
(51) Int. Cl.: F16L 47/00, E03C 1/02, F24D 3/10

(54) **Verteiler für von wenigstens einem Medium durchströmte Rohrverzweigungen**
Dispenser for a pipe manifold conveying at least one medium
Distributeur pour branchement de tuyaux parcourus par au moins un fluide

(30) Priorität: 25.05.1990 DE 9005950 U
(43) Veröffentlichungstag der Anmeldung: 27.11.1991
(73) Patentinhaber: RAFELD KUNSTSTOFFTECHNIK GmbH & Co. KG, 87640 Ebenhofen (DE)
(72) Erfinder: Rafeld, Karl, W-8954 Biessenhofen-Ebenhofen (DE)
(74) Vertreter: Kern, Wolfgang, Dipl.-Ing.

(56) Entgegenhaltungen:
- US-A- 2 600 162
- US-A- 3 407 842
- US-A- 3 736 955
- US-A- 4 801 160

## Beschreibung

Die Erfindung betrifft einen Verteiler für von wenigstens einem Medium durchströmte Rohrverzweigungen, bestehend aus einem Verteilerkörper mit seitlichen Abzweigbuchsen für den Anschluß von Verbindungs-, Absperreinrichtungen, wobei die Abzweigbuchsen im Bereich ihres vorderen, freien Endes mit einem Verbindungselement versehen sind, das mit der an die jeweilige Abzweigbuchse anzuschließenden Einrichtung strömungsdicht verschraubbar ist.

Ein solcher Verteiler ist aus der US-A-3 736 955 bekannt und weist einen quaderförmigen Verteilerkasten auf, der mittels eines Deckels verschließbar ist. Sämtliche Eingangs- und Ausgangsleitungen sind über buchsenförmige Elemente mit diesem Verteilerkasten verbunden. Eine beispielsweise mehrere hintereinanderliegende Verteiler versorgende Rohrleitung wird optisch durch einen solchen Verteiler unterbrochen. Der Deckel des Verteilers muß separat hergestellt und exakt an die Abmessungen des Kastens angepaßt werden. Außerdem ist der Deckel derart an dem Kasten zu befestigen, daß auch bei unter hohem Druck stehenden Fluiden jederzeit eine saubere, strömungsdichte und sichere Verteilereinrichtung gegeben ist.

Der Erfindung liegt die Aufgabe zugrunde, einen Verteiler der eingangs erwähnten Art zu schaffen, der ästhetisch ansprechend gestaltet, wirtschaftlich herstellbar und sicher handhabbar ist.

Diese Aufgabe wird erfindungsgemäß bei einem Verteiler der eingangs erwähnten Art dadurch gelöst, daß der Verteilerkörper rohrförmig ausgebildet ist und mit den seitlichen Abzweigbuchsen einen einteiligen Kunststoffkörper bildet, und daß der Verteilerkörper an einem seiner freien Enden eine zylindrische Erweiterung hat.

Durch die rohrförmige Ausbildung entsteht ein Verteiler, der mit Ausnahme der seitlichen Abzweigbuchsen äußerlich identisch ist mit den Zu- und Ableitungen für das den Verteiler durchströmende Medium. Die einteilige Ausbildung des Verteilerkörpers und der Abzweigbuchsen als Kunststoffkörper, beispielsweise als Spritzgußkörper, hat den Vorteil, daß die Verbindungsstellen zwischen den bisher verwendeten separaten Abzweigbuchen und dem Verteilerrohr entfallen und dadurch unter allen Betriebsbedingungen eine Langzeitdichtigkeit gegen das austretende Medium gewährleistet ist. Schrumpfvorgänge und Werkstoffalterung können deshalb in diesem Bereich nicht mehr zu Problemen führen.

In die zylindrische Erweiterung des Verteilerkörpers ist beispielsweise das freie Ende eines Rohrverbindungsstücks oder auch das freie Ende eines weiteren Verteilers einschweißbar.

Vorteilhafte Weiterbildungen der Erfindung sind Gegenstand der Unteransprüche.

Ausführungsbeispiele des Erfindungsgegenstandes werden nachfolgend anhand der Zeichnung erläutert. Es zeigen:
- Fig. 1: einen Längsschnitt durch eine erste Ausführungsform des Verteilers; und
- Fig. 2: einen Längsschnitt durch eine zweite Ausführungsform des Verteilers.

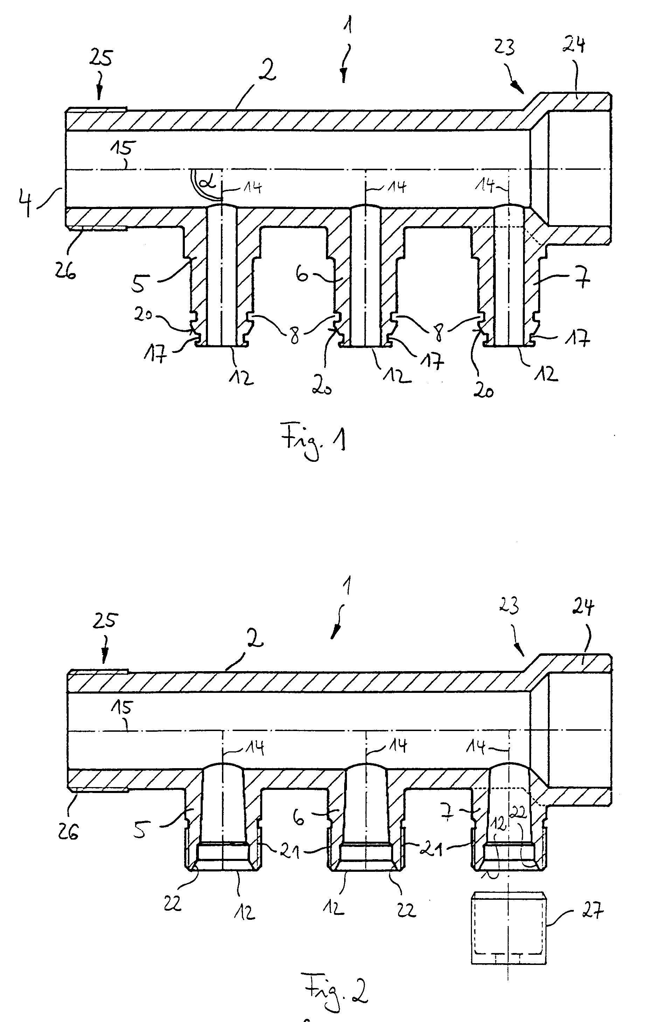

Gemäß Fig. 1 ist der Verteiler 1 als rohrförmiger Verteilerkörper 2 mit seitlichen Abzweigbuchsen 5, 6, 7 ausgebildet, die mit dem Verteilerkörper 2 einen einteiligen Kunststoffkörper bilden. Der Verteiler kann beispielsweise ein Spritzgußteil sein.

Die Abzweigbuchsen 5, 6, 7 werden mit dem bei 4 in das Rohr eintretende Medium beliefert. Das Medium kann beispielsweise eine Flüssigkeit, z.B. Heiz-, Brauch- oder Abwasser, oder ein Gas sein und auch in Form einer Zwei- oder Mehrphasenströmung durch den Verteiler strömen.

Gemäß der Zeichnung bildet zwar jede zentrale Achse 14 der Abzweigbuchsen 5, 6, 7 mit der Längsachse 15 des Verteilerrohres 2 einen rechten Winkel α, doch kann dieser Winkel auch größer oder kleiner als 90° sein.

Auf dem Außenumfang der zylindrischen Abzweigbuchsen ist im Bereich ihres vorderen Endes 12 eine Ringnut 8 vorgesehen, die nur an der mittleren und rechten Abzweigbuchse 6, 7 ausgebildet sein kann. Gemäß Fig. 2 befindet sich an jeder der Abzweigbuchsen eine Ringnut 8. Darin läßt sich ein nicht näher gezeigter Sicherungsring einsetzen. Der Sicherungsring kann ein Sprengring oder Seegerring oder entsprechender Ringkörper sein und auch aus Kunststoff bestehen. Auf dem Sicherungsring stützt sich die Innenseite des Bodens einer nicht dargestellten Überwurfmutter ab. Die Überwurfmutter hat eine Innengewinde, in das eine Verbindungs- oder Absperreinrichtung o.dgl. (nicht gezeigt) eingeschraubt werden kann. Vorzugsweise ist die Einrichtung ein Ventil.

Das Einsetzen des Sicherungsrings erfolgt, nachdem die Überwurfmutter auf die jeweilige Abzweigbuchse aufgeschoben worden ist, so daß die Innenseite ihres Bodens an dem Sicherungsring anliegt und von diesem so gehalten wird, daß die Überwurfmutter nicht herabfällt.

Gemäß der in Fig.1 dargestellten Ausführungsform ist zwischen dem als Ringnut 8 ausgebildeten Verbindungselement und dem freien Ende 12 jeder Abzweigbuchse 5, 6, 7 in dessen äußerer Oberfläche ein ringförmiger Rücksprung 17 zur Aufnahme beispielsweise eines O-Rings (nicht dargestellt) vorgesehen. Der sich zwischen der Ringnut 8 und dem Rücksprung 17 erstreckende ringförmige Abschnitt 20 der Abzweigbuchse 5, 6, 7 ist kegelstumpfförmig ausgebildet.

Ein weiteres Ausführungsbeispiel der Erfindung ist in Fig.2 dargestellt. Das Verbindungselement besteht aus einem auf der äußeren Oberfläche der Abzweigbuchse 5, 6, 7 vorgesehenen Gewinde 21, auf das eine mit einem Innengewinde versehene Einrichtung 27, z.B. eine Überwurfmutter, aufschraubbar ist. Bei diesem Ausführungsbeispiel entfällt zumindest der Zuvor erwähnte Boden der Überwurfmutter und das Gewinde erstreckt sich vorzugsweise über die gesamte Innenwand der Überwurfmutter. Es ist aber auch möglich, anstelle der Überwurfmutter einen anderen zylindrischen Körper mit Innengewinde als Einrichtung 27 vorzusehen.

Bei dieser Ausführungsform ist die ringförmige Stirnfläche 12 der Abzweigbuchse 5, 6, 7 teilweise konisch sich nach außen erweiternd ausgebildet. Die mit den Abzweigbuchsen 5, 6, 7 verbundene Einrichtung, beispielsweise ein Ventil, hat vorzugsweise eine an die entstandene Kegelfläche 22 angepaßte äußere Mantelfläche, so daß bei einem Einsetzen der Einrichtung in die Abzweigbuchse ein abdichtender Kegelsitz gewährleistet ist.

Es ist beispielsweise aber auch möglich, die in Fig. 2 dargestellte Ausführungsform ohne die Kegelfläche 22, aber beispielsweise mit einer an der Innenseite jeder Abzweigbuchse vorgesehenen Ringnut für eine O-Ringdichtung ausgestattet sein.

Gemäß den in den Fig. 1 und 2 dargestellten Ausführungsformen hat der Verteilerkörper 2 an seinem freien Ende 23 eine zylindrische Erweiterung 24, in die beispielsweise das andere freie Ende 25 eines weiteren Verteilers oder das Ende eines zylindrischen Rohres o.dgl. eingeschweißt werden kann. Im übrigen kann auch eine nicht dargestellte Kappe an die Erweiterung 24 angepaßt sein und diese verschliessen. Das andere freie Ende 25 des Verteilerkörpers 2 hat gemäß den Fig. 1 und 2 eine Außengewinde 26, auf das mit einem Innengewinde versehene Kappen oder auch Rohre mit einem Innengewinde aufgeschraubt werden können. Es ist ferner möglich, die Erweiterung 24 mit einem Innengewinde zu versehen, das mit dem Außengewinde 26 eines anderen Verteilers zusammenwirkend ausgebildet sein kann. Auf diese Weise können mehrere hintereinander angeordnete Verteiler schnell und unproblematisch miteinander verbunden wer- den. Es ist aber auch möglich, ein freies Ende 25 ohne Außengewinde 26 oder das freie Ende eines Verbindungsrohres in die Erweiterung 24 einzuschweißen oder einzelne Elemente der Ausführungsform gegeneinander auszutauschen, so daß eine aus mehreren Ausführungsbeispielen kombinierte Ausführungsform entsteht.

Der Verteilerkörper 2 mit den Abzweigbuchsen 5, 6, 7 ist ein Kunststoffkörper, vorzugsweise ein aus Polyäthylen oder Polypropylen bestehendes Spritzgußteil.

Der zuvor beschriebene Verteiler kann insbesondere aber nicht ausschließlich in einer Rohrverzweigung, z.B. in einer Fußbodenheizung oder eines Brauch- oder Abwassersystems in Gebäuden eingesetzt werden.

## Patentansprüche

1. Verteiler für von wenigstens einem Medium durchströmte Rohrverzweigungen, bestehend aus einem Verteilerkörper (2) mit seitlichen Abzweigbuchsen (5, 6, 7) für den Anschluß von Verbindungs-, Absperreinrichtungen, wobei die Abzweigbuchsen (5, 6, 7) im Bereich ihres vorderen, freien Endes (12) mit einem Verbindungselement (8, 9, 10; 21) versehen sind, das mit der an die jeweilige Abzweigbuchse anzuschließenden Einrichtung (11, 27) strömungsdicht verschraubbar ist, dadurch **gekennzeichnet,**
daß der Verteilerkörper (2) rohrförmig ausgebildet ist und mit den seitlichen Abzweigbuchsen (5, 6, 7) einen einteiligen Kunststoffkörper bildet, und
daß der Verteilerkörper (2) an einem seiner freien Enden (23, 25) eine zylindrische Erweiterung (24) hat.

2. Verteiler nach Anspruch 1, dadurch **gekennzeichnet,** daß das Verbindungselement eine Ringnut (8), einen in diese einsetzbaren Sicherungsring und eine Überwurfmutter umfaßt, deren Boden sich auf dem Sicherungsring abstützt.

3. Verteiler nach Anspruch 1 oder 2, **gekennzeichnet** durch einen zwischen dem Verbindungselement (8; 21) und dem freien Ende (12) der Abzweigbuchse (5, 6, 7) in der äußeren Oberfläche der Abzweigbuchse angeordneten ringförmigen Rücksprung (17).

4. Verteiler nach einem der Ansprüche 1 bis 3, dadurch **gekennzeichnet,** daß der von dem Verbindungselement (8; 21) sich zum freien Ende (12) der Abzweigbuchse erstreckende Abschnitt (20) der Abzweigbuchse zumindest teilweise kegelstumpfförmig ausgebildet ist.

5. Verteiler nach Anspruch 3 und 4, dadurch **gekennzeichnet,** daß der kegelstumpfförmige Abschnitt (20) zwischen dem Verbindungselement und dem Rücksprung (17) angeordnet ist.

6. Verteiler nach Anspruch 1, dadurch **gekennzeichnet,** daß das Verbindungselement aus einem auf der äußeren Oberfläche der Abzweigbuchse (5, 6, 7) vorgesehenen Gewinde (21) besteht, auf das eine vorzugsweise als Überwurfmutter ausgebildete Einrichtung (27) aufschraubbar ist.

7. Verteiler nach einem der vorhergehenden Ansprüche, dadurch **gekennzeichnet,** daß die ringförmige Stirnfläche (12) der Abzweigbuchse (5, 6, 7) zumindest teilweise konisch sich nach außen erweiternd ausgebildet ist.

8. Verteiler nach einem der vorhergehenden Ansprüche, dadurch **gekennzeichnet,** daß der Verteilerkörper (2) mit den Abzweigbuchsen (5, 6, 7) ein Spritzgußteil ist.

9. Verteiler nach einem der vorhergehenden Ansprüche, dadurch **gekennzeichnet,** daß der Verteilerkörper (2) an mindestens einem seiner freien Enden (23, 25) ein Außen- (26) oder ein Innengewinde hat.

10. Rohrverzweigung, insbesondere einer Fußbodenheizung oder eines Brauch- oder Abwassersystems in Gebäuden, mit einem Verteiler nach einem der vorhergehenden Ansprüche.

## Claims

1. Dispenser for pipe manifold conveying at least one medium, consisting of a distributor body (2) provided with lateral branch sleeves (5, 6, 7) for the connection of joining devices, blocking devices, wherein the branch sleeves (5, 6, 7) are provided within the range of their front, free ends (12) with a joining element (8, 9, 10; 21) which can be screwed in a fluid dense manner with a device (11, 27) to be connected to the respective branch sleeve, **characterized** in that the distributor body (2) is tubelike configured and forms together with the lateral branch sleeves (5, 6, 7) a unitary plastic member and that the distributor body (2) is provided with a cylindrical enlargement (24) at one of its free ends (23, 25).

2. Dispenser according to claim 1, **characterized** in that the joining element consists of an annular groove (8), a securing ring insertable into said annular groove and a screw-cap the bottom thereof being supported by said securing ring.

3. Dispenser according to claim 1 and 2, **characterized** by an annular sholder (17) arranged between the connecting element (8; 21) and the free end (12) of the branch sleeve (5, 6, 7) on the outer surface of that branch sleeve.

4. Dispenser according to one of the claims 1 through 3, **characterized** in that the portion (20) of the branch sleeve extending from the connecting element (8; 21) to the free end (12) of the branch sleeve is at least partly configured as a truncated cone.

5. Dispenser according to claim 3 and. 4, **characterized** in that the portion (20) being configured like a truncated cone is positioned between the connecting element and the sholder (17).

6. Dispenser according to claim 1, **characterized** in that the connecting element consists of a thread (21) provided on the outer surface of the branch sleeve (5, 6, 7) onto which thread a device (27) can be screwed which is preferrably configurated as a screwcap.

7. Dispenser according to one of the preceding claims, **characterized** in that the annular front face (12) of the branch sleeve (5, 6, 7) is at least partially conically configured and outwardly extending.

8. Dispenser according to one of the preceding claims, **characterized** in that the distributor body (2) with the branch sleeves (5, 6, 7) is manufactured by injection molding.

9. Dispenser according to one of the preceding claims, **characterized** in that the distributor body (2) is provided at at least one of its free ends (23, 25) with an outer thread (26) or an inner thread.

10. Manifold especially of a floor heating or of a drinking water or wastewater-system in buildings provided with a dispenser according to one of the preceding claims.

## Revendications

1. Distributeur pour branchements de tuyaux parcourus par au moins un fluide, constitué d'un corps de distributeur (2) à douilles de dérivations latérales (5, 6, 7) pour le raccordement de dispositifs de liaison et d'arrêt, les douilles de dérivation (5, 6, 7) étant munies au voisinage de leur extrémité libre avant (12) d'un élément de liaison (8, 9, 10 ; 21) qui peut être vissé de manière étanche sur le dispositif (11, 27) pouvant être raccordé à la douille de dérivation respective, caractérisé en ce que le corps de distributeur (2) est réalisé sous forme tubulaire et constitue, avec les douilles de dérivations latérales (5, 6, 7) un corps en matière plastique d'une seule pièce, et en ce que ledit corps de distributeur (2) présente un élargissement cylindrique (24) sur ses extrémités libres (23, 25).

2. Distributeur selon la revendication 1, caractérisé en ce que l'élément de liaison comprend une rainure annulaire (8), une bague de sécurité pouvant être insérée dans cette rainure et un écrou-chapeau dont le fond vient s'appuyer sur la bague de sécurité.

3. Distributeur selon la revendication 1 ou 2, caractérisé par la présence d'un évidement (17) de forme annulaire disposé dans la face extérieure de ladite douille de dérivation entre l'élément de liaison (8, 21) et l'extrémité libre (12) de la douille de dérivation (5, 6, 7).

4. Distributeur selon l'une des revendications 1 à 3, caractérisé en ce que la section (20) de la partie de la douille de dérivation s'étendant entre l'élément de liaison (20, 21) et l'extrémité libre (12) de ladite douille est configurée au moins partiellement en tronc de cône.

5. Distributeur selon les revendications 3 et 4, caractérisé en ce que la section (20) en forme de tronc de cône est disposée entre l'élément de liaison et l'évidement (17).

6. Distributeur selon la revendication 1, caractérisé en ce que l'élément de liaison est constitué par un filetage (21) prévu sur la face extérieure des douilles de dérivation (5, 6, 7), filetage sur lequel on peut visser un dispositif (27) ayant de préférence la forme d'un écrou-chapeau.

7. Distributeur selon l'une quelconque des revendications précédentes, caractérisé en ce que la face frontale de forme annulaire (12) des douilles de dérivation (5, 6, 7) est au moins partiellement de forme conique en s'élargissant vers l'extérieur.

8. Distributeur selon l'une quelconque des revendications précédentes, caractérisé en ce que le corps de distributeur (2) comportant les douilles de dérivation (5, 6, 7) est une pièce moulée par injection.

9. Distributeur selon l'une quelconque des revendications précédentes, caractérisé en ce que le corps de distributeur (2) est muni au moins sur l'une de ses extrémités libres (23, 25) d'un filetage extérieur (26) ou d'un filetage intérieur.

10. Branchement du tuyaux, en particulier pour un chauffage par le sol ou pour un circuit de consommation ou d'eau usées installés dans des immeubles, muni d'un distributeur selon l'une quelconque des revendications précédentes.
